# FASCICULE DE BREVET EUROPEEN

(11) **EP 2 404 039 B1**
(45) Date de publication et mention de la délivrance du brevet: **08.05.2013**
(21) Numéro de dépôt: 10706628.4
(22) Date de dépôt: 03.03.2010
(51) Int. Cl.: B23P 6/00, F01D 25/24, F01D 9/02

(54) **DISPOSITIF DE REPARATION POUR BRIDE DE CARTER DE MOTEUR AERONAUTIQUE**
VORRICHTUNG ZUR REPARATUR DES GEHÄUSEHALTERS EINES FLUGZEUGMOTORS
DEVICE FOR REPAIRING THE CASING HOLDER OF AN AERONAUTICAL ENGINE

(30) Priorité: 06.03.2009 FR 0951425
(43) Date de publication de la demande: 11.01.2012
(73) Titulaire: Snecma, 75015 Paris (FR)
(72) Inventeur: BOLETIS, Yannis, F-75012 Paris (FR); MERIEAU, Alexandre, Stéphane, 92130 Issy les Moulineaux (FR)
(74) Mandataire: Gevers France
(86) Numéro de dépôt international: PCT/EP2010/052644
(87) Numéro de publication internationale: WO 2010/100167

(56) Documents cités:
- EP-A1- 1 602 442
- EP-A2- 1 626 188
- US-A- 3 155 352
- US-A1- 2005 042 092

## Description

Le domaine de la présente invention est celui de la réparation de moteurs aéronautiques et plus particulièrement celui de la réparation des brides de carter festonnées.

Les moteurs aéronautiques sont généralement constitués par un assemblage de modules qui sont formés, pour leur partie externe, par une série de carters alignés les uns derrière les autres, le long de l'axe de rotation du moteur. Ces carters sont assemblés par des boulons qui passent au travers de trous pratiqués dans des brides qui s'étendent radialement aux extrémités longitudinales des carters. Ces brides sont généralement festonnées pour réduire leur masse et ne conserver de la matière qu'au niveau des trous d'assemblage. Elles servent aussi à supporter les équipements nécessaires au fonctionnement du moteur, qui sont placés à l'extérieur de celui-ci. Des supports d'équipements sont ainsi régulièrement boulonnés sur les trous pratiqués dans les brides.

Du fait des vibrations du moteur qui excitent ces équipements et de la masse relativement importante de ceux-ci, on constate, d'une part une ovalisation des trous, et, d'autre part que les festons, sollicités en fatigue, finissent par présenter des criques puis même par se rompre. Le maintien de l'équipement concerné est alors compromis.

Une recharge par soudure pour les carters en alliage à base d'aluminium, ne permet pas de retrouver des caractéristiques mécaniques équivalentes à celles de la pièce non réparée. Les solutions de réparation généralement proposées consistent en un arasage de la partie abimée et en une reprise des efforts par l'introduction d'une pièce de renfort qui se fixe sur les festons sains restants, situés de part et d'autre du feston arasé.

Les solutions actuelles de réparation reposent sur des kits, ou ensembles de pièces, qui sont spécifiques et adaptés chacun à la réparation d'un feston bien défini. Il s'ensuit que le réparateur doit disposer d'un nombre important de pièces en stock pour répondre aux divers cas possibles de festons à réparer.

On connaît par ailleurs un dispositif de fixation d'un accessoire d'un moteur aéronautique sur une de ses brides, tel que décrit dans le document US3155352. Il concerne la fixation d'un accessoire sur une bride saine du moteur et ne fournit pas d'enseignement pour la réparation d'une bride abimée.

La présente invention a pour but de remédier à ces inconvénients en proposant un kit de réparation qui soit plus simple d'utilisation et qui, entre autres, soit susceptible d'être monté sur n'importe quelle face d'une bride et puisse prendre la place d'un feston détérioré, que celui-ci soit situé d'un côté ou de l'autre d'une série de festons sains adjacents.

A cet effet, l'invention a pour objet un dispositif pour la réparation d'une bride de carter de moteur aéronautique s'étendant radialement par rapport à l'axe de rotation du moteur et comportant une série de festons, percés d'un trou, régulièrement disposés sur la circonférence de ladite bride, ledit dispositif comprenant au moins une bride de renfort apte à être fixée sur des festons sains de ladite bride de carter par l'intermédiaire de trous traversants ou borgnes, ladite bride de renfort présentant deux plans de symétrie orthogonaux. Il est caractérisé en ce que ledit dispositif comprend en outre une bride de reconditionnement montée, par l'intermédiaire d'une première partie, sur la bride de renfort à l'aide de moyens de fixation positionnés dans un des plans de symétrie de ladite bride de renfort.

La double symétrie de la bride de renfort et l'installation de la bride de reconditionnement dans un de ces plans de symétrie permet un positionnement facile, que ce soit d'un côté ou de l'autre de la bride de carter et que ce soit à droite ou à gauche du feston à réparer.

Avantageusement les trous traversants ou borgnes sont des trous taraudés. Cela permet de n'utiliser que les vis des boulons de fixation de la bride de renfort et d'éviter un encombrement inopportun des écrous.

Dans un mode préférentiel de réalisation, la bride de renfort est réalisée en un alliage d'aluminium et les trous traversants ou borgnes sont des alésages munis de douilles taraudées réalisées en acier. On peut ainsi conserver la légèreté d'une pièce en alliage d'aluminium, analogue à celui de la bride de carter, tout en garantissant un serrage correct des boulons dans cette pièce.

De façon préférentielle :
- lesdits moyens de fixation sont des trous taraudés positionnés sur la face externe de ladite bride de renfort,
- la première partie de la bride de reconditionnement s'insère dans un décrochement circonférentiel pratiqué sur ladite face externe de la bride de renfort, de façon à réduire la hauteur globale du dispositif,
- la bride de reconditionnement se présente sous la forme d'une pièce en L, constituée d'une première partie s'étendant circonférentiellement dans le prolongement de la bride de renfort et d'une deuxième partie s'étendant radialement au-delà de l'extrémité de ladite première partie,
- ladite seconde partie est décalée axialement du plan de symétrie de la première partie, de façon à compenser l'épaisseur de celle-ci et à se retrouver, après installation sur le moteur, dans le prolongement de la bride de carter,
- la bride de reconditionnement est percée d'un trou positionné après montage, à la place du trou du feston absent,
- la bride de reconditionnement est porteuse d'un pion orienté, après installation sur le moteur, selon l'axe du moteur et positionné en face de la position du trou du feston absent,
- le dispositif comporte deux brides de reconditionnement, montées aux deux extrémités de la bride de renfort dans le plan radial.

La présente demande revendique également un module de moteur aéronautique comportant au moins une bride de carter réparée à l'aide d'un dispositif décrit ci-dessus. Elle revendique aussi un moteur aéronautique comportant au moins un module tel que décrit ci-dessus.

Elle revendique enfin un procédé de réparation d'une bride de carter de moteur aéronautique s'étendant radialement par rapport à l'axe de rotation du moteur et comportant une série de festons, percés d'un trou, régulièrement disposés sur la circonférence de ladite bride, dont au moins un feston est endommagée, comportant les étapes suivantes :
- arasage du feston endommagé,
- sélection d'un secteur libre sur la bride de carter, adjacent au feston arasé qui soit susceptible de recevoir une bride de renfort et une bride de reconditionnement telles que décrites ci-dessus,
- assemblage de ladite bride de renfort et de ladite bride de reconditionnement à l'aide de moyens de fixation,
- fixation dudit assemblage sur la bride de carter par l'intermédiaire des trous des festons sains de la bride de carter et des trous traversants ou borgnes de la bride de renfort.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue d'un feston endommagé ;
- les figures 2 et 3 sont des vues en perspective d'une bride de carter sur laquelle est montée un kit de réparation, selon un mode de réalisation de l'invention, qui soutient un support d'équipement ;
- la figure 4 est une vue de face d'une bride sur laquelle sont montés deux kit de réparations selon un mode de réalisation de l'invention.

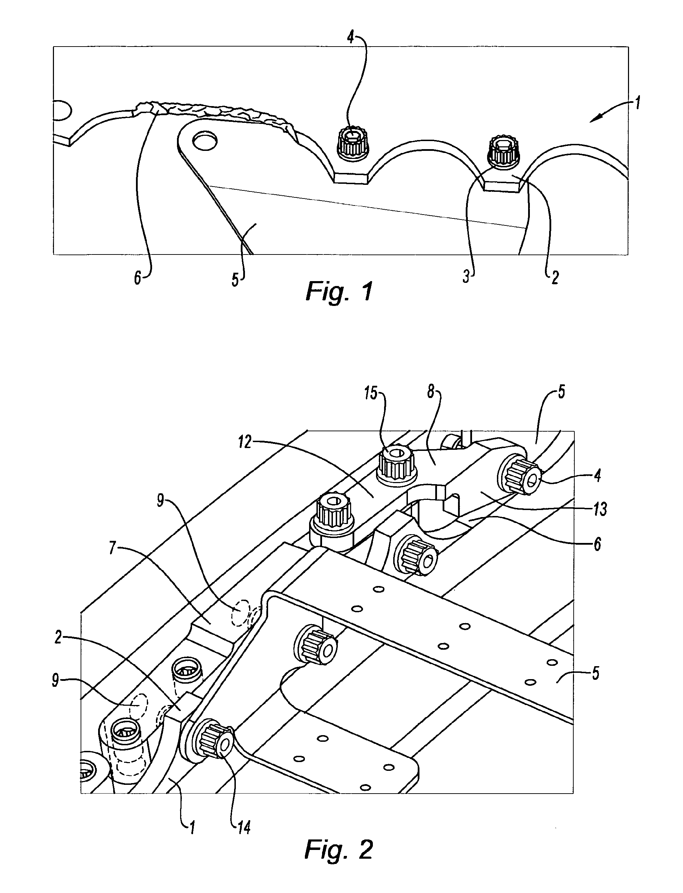

En se référant à la figure 1, on voit une bride 1 non structurale d'un carter d'un module constitutif d'un moteur aéronautique, s'étendant radialement par rapport à l'axe du moteur, dont la forme extérieure se présente sous la forme d'une succession de festons 2 percés d'un trou 3 par lequel passe un boulon de fixation 4. Ce boulon a pour objet de solidariser les brides de deux carters adjacents entre eux et/ou de soutenir le support 5 d'un équipement du moteur. Sur la figure 1 on voit qu'un feston a été arraché par suite d'une usure de contact (ou fretting), créée par une ambiance vibratoire importante.

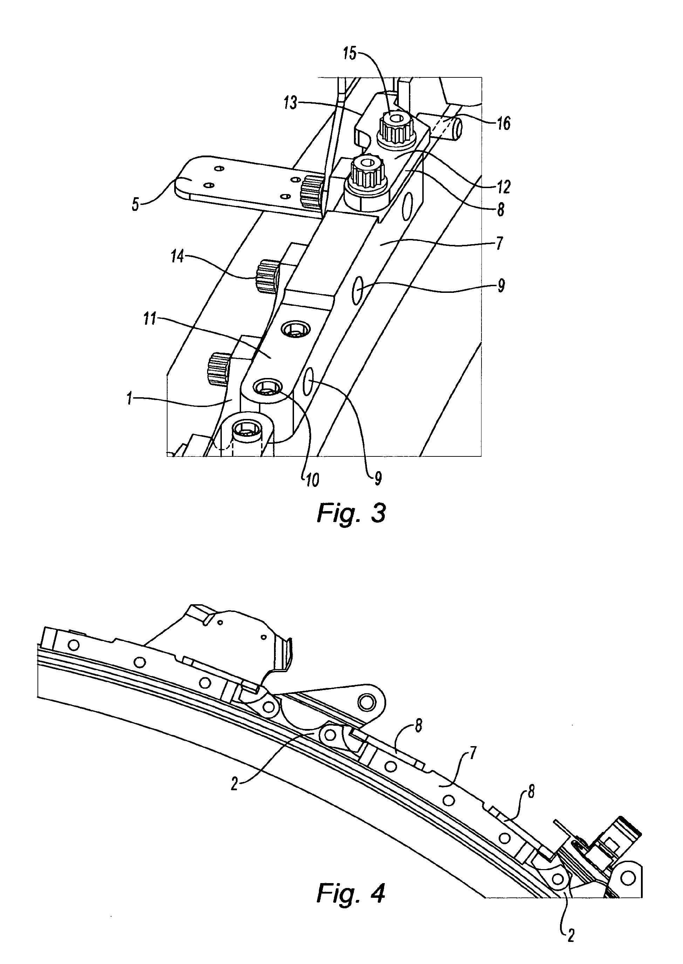

En se référant maintenant aux figures 2 et 3, on voit une bride 1 d'un carter de moteur, sur laquelle est monté un kit de réparation de festons endommagés. Cette bride présente un feston endommagé 6 qui a été arasé pour éliminer toute incertitude sur la tenue des parties de métal restantes et pour repartir sur une configuration connue qui a fait l'objet d'une validation sur le plan mécanique lors de la définition du kit de réparation. Placés de façon adjacente au feston arasé 6 on voit trois festons sains munis de leurs boulons 4 de fixation d'un support d'équipement 5. Parallèlement à la bride 1, et fixée sur elle par l'intermédiaire des vis des mêmes boulons 4 des trois festons sains, le kit comprend une bride de renfort 7 et une bride de reconditionnement 8 portée par la bride de renfort 7.

La bride de renfort 7 a la forme d'un parallélépipède courbe, sa courbure reprenant celle de la bride 1 sur laquelle elle est fixée, percé sur ses faces latérales de trois trous taraudés traversants 9, dans lesquels s'engagent des vis sans écrou 14 en lieu et place des boulons 4 utilisés pour des festons sains. La bride de carter étant non structurale, la bride de renfort est généralement en alliage d'aluminium pour des raisons de légèreté ; les taraudages sont réalisés sur des douilles en acier implantées dans les trous traversants 9 afin de résister au serrage des vis 14 et d'opposer une résistance suffisante à un éventuel desserrage intempestif. Les trous traversants 9 pourraient évidemment être remplacés par deux trous borgnes placés en alignement l'un de l'autre.

La bride de renfort 7 présente à chaque extrémité sur sa face externe deux trous taraudés 10 positionnés l'un à côté de l'autre le long de la bride 1, qui sont également munis de douilles en acier pour résister au serrage d'une vis 15 de maintien de la bride de reconditionnement 8. La face externe de la bride de renfort 7 peut, comme illustré sur les figures 2 et 3, présenter à chacune de ses extrémités un décrochement circonférentiel 11, afin de réduire son encombrement radial et compenser celui apporté par la bride de reconditionnement 8.

Il importe de noter que la bride de renfort 7 présente une double symétrie, par rapport à un plan orienté radialement passant par les tous taraudés 10 et par rapport à un plan passant par l'axe de rotation du moteur. Cette double symétrie permet d'utiliser cette bride de renfort dans toutes les configurations envisageables, que ce soit d'un côté ou de l'autre de la bride endommagée et de pouvoir y attacher une bride de reconditionnement sur l'une quelconque de ses extrémités. Le réparateur a ainsi une grande latitude de choix quant au positionnement de cette pièce et peut, dans la très grande majorité des cas, l'installer quelle que soient la configuration et le positionnement relatif des festons sains et des festons arasés.

La bride de reconditionnement 8 se présente sous la forme d'une pièce en L, constituée d'une première partie 12 placée sur le décrochement circonférentiel 11 de la bride de renfort 7 et s'étendant circonférentiellement dans le prolongement de ladite bride, et d'une deuxième partie 13 s'étendant radialement au-delà de l'extrémité de la première partie 12. Cette seconde partie 13 est décalée axialement du plan de symétrie de la première partie, de façon à compenser l'épaisseur de celle-ci et à se retrouver dans le prolongement de la bride de carter 1. La seconde partie est généralement percée d'un trou 3 dans lequel passe un boulon 4, ce trou ayant pour fonction de remplacer le trou du feston arasé 6.

La bride de reconditionnement 8 est tenue sur la bride de renfort par deux vis de maintien 15 traversant la première partie 12, qui s'engagent dans les trous taraudés 10 pratiqués dans la face externe de la bride de renfort 7.

On remarque que sur les deux figures la bride de renfort 7 a la même configuration, ce qui permet de n'en fabriquer qu'une seule version, et peut être utilisée quelle que soit la disposition relative du feston arasé 6 et des festons sains et quel que soit le côté, amont ou aval en référence au sens de l'écoulement gazeux dans le moteur, de la bride du carter 1 sur lequel elle est montée.

En revanche la bride de reconditionnement existe en deux versions, selon que la bride de renfort 7 est positionnée du côté amont ou du côté aval de la bride de carter 1. Ces deux versions sont symétriques l'une de l'autre par rapport au plan de symétrie de la première partie 12 de la pièce.

Une variante de cette bride de reconditionnement est représentée sur la figure 3 où la deuxième partie 13 n'est pas percée d'un trou 3 destiné à recevoir un boulon 4 mais est porteuse d'un pion 16 qui est destiné à coopérer avec un trou pratiqué dans le support d'équipement 5 à soutenir.

En se référant à la figure 4, on voit une bride de carter fortement endommagée, avec une distance d'endommagement correspondant à trois festons arasés entre deux festons sains 2. La réparation de la bride est assurée par la mise en place d'une bride de renfort 7 à trois trous taraudés 9 et de deux brides de reconditionnement 8, de versions différentes. Une première bride de reconditionnement est positionnée à droite de la bride de renfort 7 et fixée sur le trou 3 du feston sain de droite, alors que la seconde bride de reconditionnement est positionnée à gauche et fixée sur le feston sain de gauche. La figure 4 montre également une seconde réparation de la bride avec une seconde bride de renfort qui remplace une autre partie manquante de la bride de carter 1.

Les brides de renfort 7 représentées sur les figures portent trois trous taraudés traversants 9 sur leurs faces latérales, car cette configuration permet de réparer la majeure partie des brides de carter endommagées. Il est bien évident que des brides de renfort à 2 trous taraudés 9 peuvent, par exemple, être utilisées dans des cas où l'espace disponible le long de la bride de carter 1 est insuffisant, pour autant que les calculs de tenue mécanique associés le permettent, ou encore des brides à plus de trois trous taraudés traversants 9 lorsque le nombre de festons arasés adjacents est supérieur à trois.

On va maintenant décrire le montage d'un kit de réparation selon l'invention sur une bride de carter endommagée. La partie endommagée du feston 2 est préalablement arasée pour retrouver une situation saine et une configuration de départ standard connue. Ce kit comprend une bride de renfort 7 et une bride de reconditionnement 8, à choisir entre ses deux versions selon que sa deuxième partie 13 est, vue de dessus, décalée vers la droite ou vers la gauche par rapport à sa première partie 12.

Dans le cas de la réparation d'un seul feston 2 d'une bride de carter endommagée, l'opérateur recherche un secteur libre sur la bride de carter, adjacent au feston arasé, qui soit susceptible de recevoir une bride de renfort 7, que ce soit d'un côté de la bride ou de l'autre. La bride de renfort 7 présentant une double symétrie plane, elle peut être installée quel que soit le choix effectué pour le côté de la bride. Il fixe cette bride de renfort sur la bride de carter 1, à l'aide de vis sans écrous 14, qui passent à travers les trous 3 de la bride de carter 1 et viennent s'engager dans les douilles en acier des trous taraudés traversants 9.

En fonction du choix qu'il a effectué pour le côté de montage de la bride renfort 7 sur la bride de carter 1 (côté dit droit ou côté dit gauche, en référence à une vue de dessus du moteur, l'avant du moteur étant par convention défini comme étant à gauche de l'observateur) et en fonction du positionnement de cette bride de renfort par rapport au feston arasé, il sélectionne la version appropriée de la bride de reconditionnement 8. Il s'agit d'une bride dont la deuxième partie 13 est décalée vers la gauche dans le cas où la bride de renfort est placée sur le côté droit de la bride de carter et où elle se monte sur l'extrémité droite de celle-ci (en regardant la bride de carter) et d'une bride dont la deuxième partie 13 est décalée vers la droite si elle se monte sur l'extrémité gauche de celle-ci. A contrario, si le bride de renfort 7 est montée sur le côté gauche de la bride de carter 1 la deuxième partie 13 de la bride de reconditionnement 8 est décalée vers la droite si elle est positionnée à son extrémité gauche et décalée vers la gauche si elle est positionnée à son extrémité droite.

Il fixe la bride de reconditionnement 8 sur la bride de renfort 7 à l'aide des vis de maintien 15 qui s'engagent dans les douilles des trous taraudés 10 pratiqués dans la face externe de la bride de renfort. Le trou 3 percé dans la deuxième partie 13 se trouve alors en position pour reprendre les fonctions qui étaient auparavant assurées par le trou 3 du feston qui a été arasé. Les supports d'équipements 5 qui étaient portés par la bride de carter 1 et qui utilisaient le trou du feston arasé peuvent alors être remis en place, selon le même mode opératoire que dans le cas d'une bride non endommagée.

Dans le cas, illustré sur la figure 4, où la bride de renfort 7 sert à remplacer un secteur endommagé de la bride de carter 1, l'opérateur procède d'abord à un assemblage d'une bride de renfort 7 avec deux brides de reconditionnement 8 de types différents, l'une étant décalée vers la droite, l'autre vers la gauche. L'ensemble ainsi formé est fixé sur la bride de carter 1 à l'aide des trous 3 pratiqués dans les deuxièmes parties des deux brides de reconditionnement 8 et des trous 3 des deux festons sains adjacents à ce kit de réparation. Le côté de la bride de carter 1 contre lequel le kit de réparation est positionné est imposé pour qu'après montage une des faces de la bride de renfort 7 se trouve dans le prolongement d'une des faces de ladite bride de carter 1.

Bien que l'invention ait été décrite en relation avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, tel que défini par les revendications.

## Revendications

1. Dispositif pour la réparation d'une bride de carter (1) de moteur aéronautique s'étendant radialement par rapport à l'axe de rotation du moteur et comportant une série de festons (2), percés d'un trou (3), régulièrement disposés sur la circonférence de ladite bride, ledit dispositif comprenant au moins une bride de renfort (7) apte à être fixée sur des festons sains (2) de ladite bride de carter (1) par l'intermédiaire de trous traversants ou borgnes (9), ladite bride de renfort (7) présentant deux plans de symétrie orthogonaux,
**caractérisé en ce que** ledit dispositif comprend en outre une bride de reconditionnement (8) montée, par l'intermédiaire d'une première partie (12), sur la bride de renfort (7) à l'aide de moyens de fixation (10) positionnés dans un des plans de symétrie de ladite bride de renfort.

2. Dispositif selon la revendication 1 dans lequel les trous traversants ou borgnes (9) sont des trous taraudés.

3. Dispositif selon la revendication 1 dans lequel la bride de renfort (7) est réalisée en un alliage d'aluminium et dans lequel les trous traversants ou borgnes (9) sont des alésages munis de douilles taraudées réalisées en acier.

4. Dispositif selon la revendication 3 dans lequel lesdits moyens de fixation (10) sont des trous taraudés positionnés sur la face externe de ladite bride de renfort.

5. Dispositif selon l'une des revendications 3 ou 4 dans lequel la première partie (12) de la bride de reconditionnement (8) s'insère dans un décrochement circonférentiel (11) pratiqué sur ladite face externe de la bride de renfort (7), de façon à réduire la hauteur globale du dispositif.

6. Dispositif selon l'une des revendication 3 à 5 dans lequel la bride de reconditionnement (8) se présente sous la forme d'une pièce en L, constituée d'une première partie (12) s'étendant circonférentiellement dans le prolongement de la bride de renfort (7) et d'une deuxième partie (13) s'étendant radialement au-delà de l'extrémité de ladite première partie (12).

7. Dispositif selon la revendication 6 dans lequel ladite seconde partie (13) est décalée axialement du plan de symétrie de la première partie (12) dans lequel sont positionnés les moyens de fixation (10), de façon à compenser l'épaisseur de celle-ci et à se retrouver, après installation sur le moteur, dans le prolongement de la bride de carter (1).

8. Dispositif selon l'une des revendications 3 à 7 dans lequel la bride de reconditionnement (8) est percée d'un trou positionné après montage, à la place du trou (3) du feston absent (6).

9. Dispositif selon l'une des revendications 3 à 7 dans lequel la bride de reconditionnement (8) est porteuse d'un pion orienté, après installation sur le moteur, selon l'axe du moteur et positionné en face de la position du trou (3) du feston absent (6).

10. Dispositif selon l'une des revendications 1 à 9 comportant deux brides de reconditionnement (8), montées aux deux extrémités de la bride de renfort (7) situées dans le plan dans lequel sont positionnés les moyens de fixation (10).

11. Module de moteur aéronautique comportant au moins une bride de carter (1) réparée à l'aide d'un dispositif selon l'une des revendications ci-dessus.

12. Moteur aéronautique comportant au moins un module selon la revendication 11.

13. Procédé de réparation d'une bride de carter de moteur aéronautique s'étendant radialement par rapport à l'axe de rotation du moteur et comportant une série de festons (2), percés d'un trou (3), régulièrement disposés sur la circonférence de ladite bride, dont au moins un feston (6) est endommagé, comportant les étapes suivantes :
- arasage du feston endommagé (6),
- sélection d'un secteur libre sur la bride de carter, adjacent au feston arasé qui soit susceptible de recevoir une bride de renfort (7) et une bride de reconditionnement (8) selon l'une des revendications 1 à 9,
- assemblage de ladite bride de renfort (7) et de ladite bride de reconditionnement (8) à l'aide de moyens de fixation (10),
- fixation dudit assemblage sur la bride de carter (1) par l'intermédiaire des trous (3) des festons sains de la bride de carter (1) et des trous traversants ou borgnes (9) de la bride de renfort (7).

## Patentansprüche

1. Vorrichtung zur Reparatur eines Gehäuseflansches (1) eines Flugzeugmotors, der sich radial bezüglich der Drehachse des Motors erstreckt und eine Reihe von mit einem Loch (3) versehenen Höckern (2) aufweist, die gleichmäßig auf dem Umfang des Flansches angeordnet sind, wobei die Vorrichtung mindestens einen Verstärkungsflansch (7) umfasst, der geeignet ist, an unversehrten Höckern (2) des Gehäuseflansches (1) über Durchgangslöcher oder Sacklöcher (9) befestigt zu werden, wobei der Verstärkungsflansch (7) zwei orthogonale Symmetrieebenen aufweist,
**dadurch gekennzeichnet, dass** die Vorrichtung außerdem einen Instandsetzungsflansch (8) umfasst, der über einen ersten Abschnitt (12) an dem Verstärkungsflansch (7) mit Hilfe von Befestigungsmitteln (10) angebracht ist, die in einer der Symmetrieebenen des Verstärkungsflansches positioniert sind.

2. Vorrichtung nach Anspruch 1, wobei die Durchgangslöcher oder Sacklöcher (9) Gewindelöcher sind.

3. Vorrichtung nach Anspruch 1, wobei der Verstärkungsflansch (7) aus einer Aluminiumlegierung hergestellt ist und wobei die Durchgangslöcher oder Sacklöcher (9) Bohrungen sind, die mit aus Stahl hergestellten Gewindehülsen ausgestattet sind.

4. Vorrichtung nach Anspruch 3, wobei die Befestigungsmittel (10) Gewindelöcher sind, die an der Außenseite des Verstärkungsflansches (7) positioniert sind.

5. Vorrichtung nach einem der Ansprüche 3 oder 4, wobei der erste Abschnitt (12) des Instandsetzungsflansches (8) in einen Umfangsabsatz (11) eingesetzt wird, der an der Außenseite des Verstärkungsflansches (7) ausgebildet ist, so dass die Gesamthöhe der Vorrichtung verringert wird.

6. Vorrichtung nach einem der Ansprüche 3 bis 5, wobei der Instandsetzungsflansch (8) die Gestalt eines L-förmigen Teils aufweist, das aus einem ersten Abschnitt (12) besteht, der sich in Umfangsrichtung in der Verlängerung des Verstärkungsflansches (7) erstreckt, und aus einem zweiten Abschnitt (13), der sich radial über das Ende des ersten Abschnitts (12) hinaus erstreckt.

7. Vorrichtung nach Anspruch 6, wobei der zweite Abschnitt (13) axial zur Symmetrieebene des ersten Abschnitts (12) versetzt ist, in welcher die Befestigungsmittel (10) positioniert sind, so dass er die Dicke desselben kompensiert und sich, nach Anbau am Motor, in der Verlängerung des Gehäuseflansches (1) befindet.

8. Vorrichtung nach einem der Ansprüche 3 bis 7, wobei der Instandsetzungsflansch (8) mit einem Loch versehen ist, das nach der Montage am Ort des Loches (3) des fehlenden Höckers (6) positioniert ist.

9. Vorrichtung nach einem der Ansprüche 3 bis 7, wobei der Instandsetzungsflansch (8) einen Stift trägt, der nach Anbau am Motor in Richtung der Achse des Motors ausgerichtet ist und gegenüber der Position des Loches (3) des fehlenden Höckers (6) positioniert ist.

10. Vorrichtung nach einem der Ansprüche 1 bis 9, welche zwei Instandsetzungsflansche (8) aufweist, die an den beiden Enden des Verstärkungsflansches (7) angebracht sind, die sich in der Ebene befinden, in welcher die Befestigungsmittel (10) positioniert sind.

11. Flugzeugmotormodul, das mindestens einen Gehäuseflansch (1) aufweist, der mit Hilfe einer Vorrichtung nach einem der vorhergehenden Ansprüche repariert worden ist.

12. Flugzeugmotor, der mindestens ein Modul nach Anspruch 11 aufweist.

13. Verfahren zur Reparatur eines Gehäuseflansches eines Flugzeugmotors, der sich radial bezüglich der Drehachse des Motors erstreckt und eine Reihe von mit einem Loch (3) versehenen Höckern (2) aufweist, die gleichmäßig auf dem Umfang des Flansches angeordnet sind, wobei mindestens ein Höcker (6) beschädigt ist, welches die folgenden Schritte aufweist:
- Abtragen des beschädigten Höckers (6),
- Auswahl eines dem abgetragenen Höcker benachbarten freien Sektors an dem Gehäuseflansch, der geeignet ist, einen Verstärkungsflansch (7) und einen Instandsetzungsflansch (8) nach einem der Ansprüche 1 bis 9 aufzunehmen,
- Zusammenbau des Verstärkungsflansches (7) und des Instandsetzungsflansches (8) mit Hilfe von Befestigungsmitteln (10),
- Befestigung dieser Baugruppe an dem Gehäuseflansch (1) über Löcher (3) der unversehrten Höcker (2) des Gehäuseflansches (1) und Durchgangslöcher oder Sacklöcher (9) des Verstärkungsflansches (7).

## Claims

1. A device for repairing an aeronautical engine casing flange (1) running radially with respect to the axis of rotation of the engine and comprising a series of scallop lips (2), pierced with a hole (3), uniformly arranged on the circumference of said flange, said device comprising at least one reinforcing flange (7) that can be attached to the healthy scallop lips (2) of said casing flange (1) using through-holes or blind holes (9), said reinforcing flange (7) having two orthogonal planes of symmetry, **characterized in that** said device further comprises a refurbishment flange (8) mounted, via a first part (12), on the reinforcing flange (7) using fastening means (10) positioned in one of the planes of symmetry of said reinforcing flange.

2. The device as claimed in claim 1, in which the through-holes or blind holes (9) are tapped holes.

3. The device as claimed in claim 1, in which the reinforcing flange (7) is made of an aluminum alloy and in which the through-holes or blind holes (9) are bores fitted with tapped steel inserts.

4. The device as claimed in claim 3, in which said fastening means (10) are tapped holes positioned on the external face of said reinforcing flange.

5. The device as claimed in either of claims 3 and 4, in which the first part (12) of the refurbishment flange (8) is inserted in a circumferential cutout (11) made on said external face of the reinforcing flange (7), so as to reduce the overall height of the device.

6. The device as claimed in one of claims 3 to 5, in which the refurbishment flange (8) is in the form of an L-shaped component made up of a first part (12) running circumferentially in the continuation of the reinforcing flange (7), and of a second part (13) running radially beyond the end of said first part (12).

7. The device as claimed in claim 6, in which said second part (13) is axially offset from the plane of symmetry of the first part (12) in which the fastening means (10) are positioned so as to compensate for the thickness thereof and to lie, following installation on the engine, in the continuation of the casing flange (1).

8. The device as claimed in one of claims 3 to 7, in which the refurbishment flange (8) is pierced with a hole which, after fitting, is positioned in the place of the hole (3) of the missing scallop lip (6).

9. The device as claimed in one of claims 3 to 7, in which the refurbishment flange (8) bears a peg which, following installation on the engine, is directed along the axis of the engine and positioned facing the position of the hole (3) of the missing scallop lip (6).

10. The device as claimed in one of claims 1 to 9, comprising two refurbishment flanges (8) which are mounted at the two ends of the reinforcing flange (7) and situated in the plane in which the fastening means (10) are positioned.

11. An aeronautical engine module comprising at least one casing flange (1) that has been repaired using a device as claimed in one of the above claims.

12. An aeronautical engine comprising at least one module as claimed in claim 11.

13. A method of repairing an aeronautical engine casing flange running radially with respect to the axis of rotation of the engine and comprising a series of scallop lips (2), pierced with a hole (3), uniformly arranged on the circumference of said flange, at least one scallop lip (6) of which is damaged, comprising the following steps:
- leveling of the damaged scallop lip (6),
- selecting a free sector on the casing flange, adjacent to the leveled-off scallop lip and which is capable of accepting a reinforcing flange (7) and a refurbishment flange (8) as claimed in one of claims 1 to 9,
- assembling said reinforcing flange (7) and said refurbishment flange (8) using fastening means (10),
- fastening said assembly to the casing flange (1) using the holes (3) in the healthy scallop lips of the casing flange (1) and the through-holes or blind holes (9) in the reinforcing flange (7).
